# EUROPÄISCHE PATENTSCHRIFT

(11) **EP 0 389 819 B1**
(45) Veröffentlichungstag und Bekanntmachung des Hinweises auf die Patenterteilung: **21.07.1993**
(21) Anmeldenummer: 90103974.3
(22) Anmeldetag: 01.03.1990
(51) Int. Cl.: F28F 5/02, B29C 33/04

(54) **Dichtungsplatten - Kalander**
Calender for packing sheets
Calandre pour plaques de joint

(30) Priorität: 20.03.1989 DE 3909134
(43) Veröffentlichungstag der Anmeldung: 03.10.1990
(73) Patentinhaber: Paul Troester Maschinenfabrik, D-30519 Hannover (DE)
(72) Erfinder: Siebert, Hermann, D-6443 Sontra-Ulfen (DE)
(74) Vertreter: Junius, Walther, Dr.

(56) Entgegenhaltungen:
- DE-A- 3 819 391
- DE-B- 1 151 652
- FR-A- 2 438 706
- GB-A- 1 063 401
- US-A- 4 050 510

## Beschreibung

Die Erfindung betrifft einen Dichtungsplatten-Kalander mit einer Heizwalze, welche aus einem Mantel mit achsparallelen, als Heizwasserkanäle dienenden peripheren Bohrungen und zwei Böden an den Stirnseiten der Heizwalze aufgebaut ist, und in welcher ein sich vom einen Boden zum anderen Boden erstreckendes Rohr für Heizwasser angeordnet ist, von dem Kanäle radial abzweigen, die zu den achsparallelen Bohrungen im Mantel führen.

Ein derartiger Dichtungsplatten-Kalander ist aus der DE-A-23 21 367 bekannt geworden, der jedoch wegen unüberwindbarer technischer Schwierigkeiten nicht gebaut werden konnte. Die in dieser Druckschrift niedergelegte Idee, die in ihren Dimensionen sehr große und daher hohl auszuführende Heizwalze nicht mehr mit dem schwer regelbaren Heizmedium Dampf, sondern mit Heißwasser zu beheizen, birgt erhebliche Vorteile in sich, jedoch ließen sich die Böden wegen der ihnen und dem Walzenmantel innewohnenden Massen und der in den Böden liegenden radialen, zu den peripheren Bohrungen führenden Kanäle nicht ausreichend sicher befestigen.

Durch die DE-A-38 19 391 ist eine beheizte hohle Walze einer Papierherstellungsmaschine bekannt geworden, deren Mantel aus zwei ineinander geschobenen Hohlzylindern aufgebaut ist und periphere gefräste achsparallele Heizkanäle im Mantel aufweist, die sämtlich mit in gleicher Richtung fließendem Dampf beheizt werden, der über radiale Kanäle in den Böden zu- und abgeführt wird. Diese Böden sind einstückig mit Wellenzapfen hergestellt, so daß Probleme der Befestigung der Böden an der Welle nicht auftreten. Die gleiche Fließrichtung des Dampfes führt jedoch dazu, daß die eine Seite der Walze heißer als die andere ist.

Bei der Herstellung von Dichtungsplatten ist jedoch streng darauf zu achten, daß die Temperatur auf der gesamten Walzenoberfläche konstant ist, schon kleine Temperaturunterschiede führen zur Produktion von Ausschußware.

Lösungen dieses Problems der gleichmäßigen Oberflächentemperatur einer Walze sind für volle Kalanderwalzen aus der DE-A-23 15 669 bekannt geworden, wo auf beiden Stirnseiten der Heizwalze das Heizmedium zu- und abgeführt wird und dieses benachbarte Kanäle gegenläufig durchströmt. Bei Hohlwalzen großen Durchmessers sind diese Maßnahmen nicht anwendbar, weil beim Anheizen der dicke Walzenmantel sich wesentlich langsamer erwärmt und daher auch wesentlich langsamer dehnt als die das Heizmedium zuführenden Einbauten.

Die Erfindung vermeidet die Nachteile des Standes der Technik. Es ist die Aufgabe der Erfindung, mit einfachen Mitteln eine Beheizung von achsparallelen Bohrungen im Walzenmantel der Heizwalze zu ermöglichen, ohne die Festigkeit des Aufbaues der Heizwalze zu beeinträchtigen, so daß eine schnelle und wirkungsvolle Beheizung der Heizwalze bei gleichzeitiger hervorragender Regelfähigkeit erreicht wird.

Die Erfindung besteht darin, daß die Böden je zentrisch mit einem Wellenzapfen versehen sind, von denen zumindest der eine für die Zu- und/oder Abführung von Heizwasser hohl ist, daß im Inneren der Heizwalze mindestens ein weiteres Rohr für Heizwasser angeordnet ist, das mit dem ersten Rohr ein Rohrsystem bildet, daß diese Rohre Mittel für die Aufnahme thermischer Dehnungen aufweisen und daß von jedem Rohr zu den peripheren Bohrungen im Walzenmantel an beiden Stirnseiten der Heizwalze Kanäle radial abgehen.

Auf diese Weise ist es gelungen, eine Heizwalze für Dichtungsplattenkalander in einfacher Weise so zu gestalten, daß sie eine hohe Stabilität, eine geringe Störanfälligkeit und eine lange Lebensdauer aufweist. Sie ist in ihrer Oberflächentemperatur gut und schnell regelbar und sie ist sogar leichter als die herkömmlichen mit Dampf beheizten Heizwalzen, weil die Böden mit Ausnehmungen versehen werden können.

Dabei ist es zweckmäßig, wenn der eine Wellenstumpf hohl ist und sich das Rohrsystem durch diesen hindurch erstreckt. Mit einem solchen Rohrsystem lassen sich Dichtungsprobleme am einfachsten umgenen.

Es besteht aber auch die Möglichkeit, daß beide Wellenstümpfe hohl sind und durch den einen die Heißwasserzuleitung, durch den anderen die Heißwasserableitung führt.

Vorteilhaft ist es, wenn die Kanäle durch radiale Bohrungen in den Walzenböden gebildet sind. Die Kanäle könnten aber auch durch seitlich der Walzenböden verlegte Rohre gebildet sein.

Zur weiteren Herabsetzung des Gewichtes ist es vorteilhaft, wenn die Böden Durchbrechungen aufweisen und vorzugsweise Speichen haben.

Die Dichtungsprobleme lassen sich am einfachsten umgehen, wenn am Umfang des Rohrsystems Absätze mit Dichtflächen oder konische Dichtflächen angeordnet sind.

Dabei hat es sich als vorteilhaft erwiesen, wenn das Rohrsystem aus zwei konzentrisch angeordneten Rohren und mindestens einem dritten, das äußere Rohr konzentrisch umgebenden Rohrstück besteht, welches mit dem inneren Rohr durch einen Kanal verbunden ist. Auf diese Weise lassen sich on jeder Stirnseite Zu- und Ableitungen für das Heißwasser realisieren, was für eine gleichmäßige Beheizung der Walzenoberfläche notwendig ist.

Die Erfindung ist nachstehend anhand eines in der Zeichnung schematisch dargestellten Ausführungsbeispieles näher erläutert. Es zeigen:

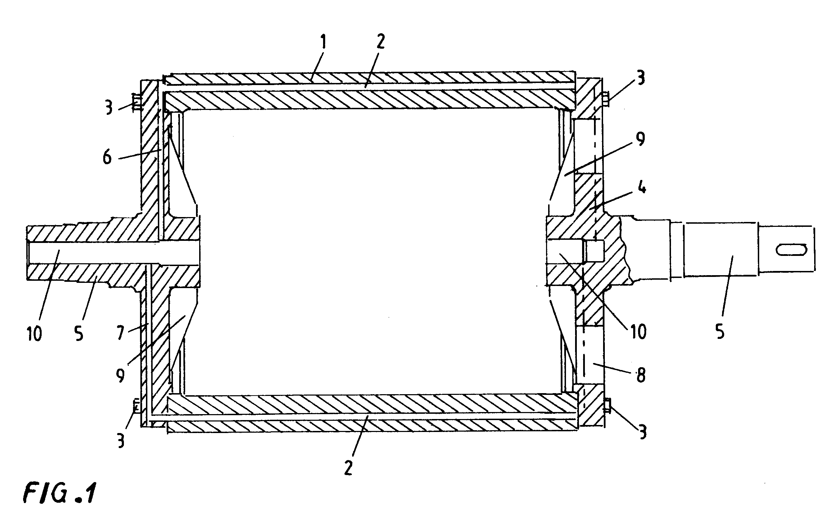

- Fig. 1: einen Schnitt durch die Heizwalze,
- Fig. 2: einen Schnitt durch das in die Heizwalze eingebaute Rohrsystem,
- Fig. 3: einen Schnitt durch das Befestigungssystem des Rohrsystems an der Heizwalze.

Die Heizwalze besteht aus einem Mantel 1, welcher achsparallele periphere Bohrungen 2 aufweist. Der Mantel ist mittels Schrauben 3 mit Böden 4 verbunden, welche einstückig mit Wellenzapfen 5 hergestellt sind. Diese Böden 4 weisen radiale Kanäle 6 für die Zuführung und radiale Kanäle 7 für die Abführung des Heißwassers zu bzw. von den achsparallelen Bohrungen 2 auf. Diese radialen Kanäle 6, 7 müssen in jedem der beiden Walzenböden angeordnet sein. Um das Gewicht der Kalanderwalze herunterzusetzen, weisen die Böden 4 Ausnehmungen 8 auf, zwischen denen sich Speichen 9 befinden.

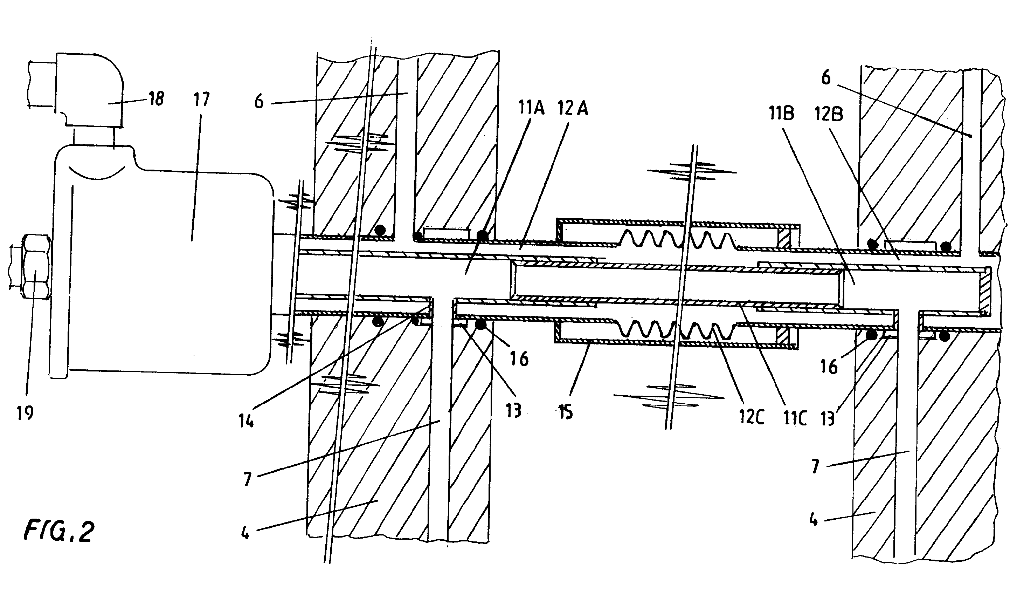

Zumindest der eine Wellenzapfen 5 weist eine zentrische Bohrung 10 auf, durch die das Rohrsystem der Fig. 2 geführt ist bzw. in die das Rohrsystem der Fig. 2 eingesetzt ist, welches sich bis in die radiale, als Sackloch ausgeführte zentrische Bohrung 10 des rechten Wellenzapfens fortsetzt.

Dieses Rohrsystem der Fig. 2 besteht aus einem zentralen Rohr 11 für die Abführung des Heißwassers sowie einem dieses Rohr 11 umgebenden Rohres 12 für die Heizwasserzuführung. Von diesem Rohr 12 für die Heizwasserzuführung gehen die radialen Kanäle 6, die durch die Böden 4 verlaufen, direkt ab. Da die Kanäle 7 für die Heizwasserabführung nicht direkt mit dem inneren Rohr 11 verbunden werden können, sind in den Bohrungen der Böden 4 ringförmige Ausnehmungen 13 vorgesehen, welche über Kanalstücke 14 mit dem inneren Rohr 11 verbunden sind. Im Zwischenraum zwischen den beiden Böden 4 ist das äußere Rohr 12 von einer Hülse 15 umgeben. Auf das äußere Rohr 12 aufgesetzte Dichtungen 16 verhindern einen Heißwasseraustritt oder -übertritt. Eine Vorrichtung 17 mit feststehendem Gehäuse, einem Heißwasserzulauf 18 und einer Heißwasserabführung 19 besorgt die Ein- und Ableitung in das sich mit der Heizwalze drehende Rohrsystem.

Unter der Hülse 15 befinden sich die Mittel zur Aufnahme von thermischen Dehnungen, nämlich für das äußere Rohr 12 ein Wellenbalg 12 C, der den einen Teil 12 A des äußeren Rohres mit dem anderen Teile 12 B des äußeren Rohres verbindet, sowie ein in der Rohrabschnitten 11 A and 11 B eingesetztes, verschiebbares Rohrstück 11 C, welches diese beiden Rohrstücke 11 A, 11 B miteinander verbindet und durch seine abgedichtete Einlagerung in diesen beiden Rohrteilen thermische Dehnungen gestattet.

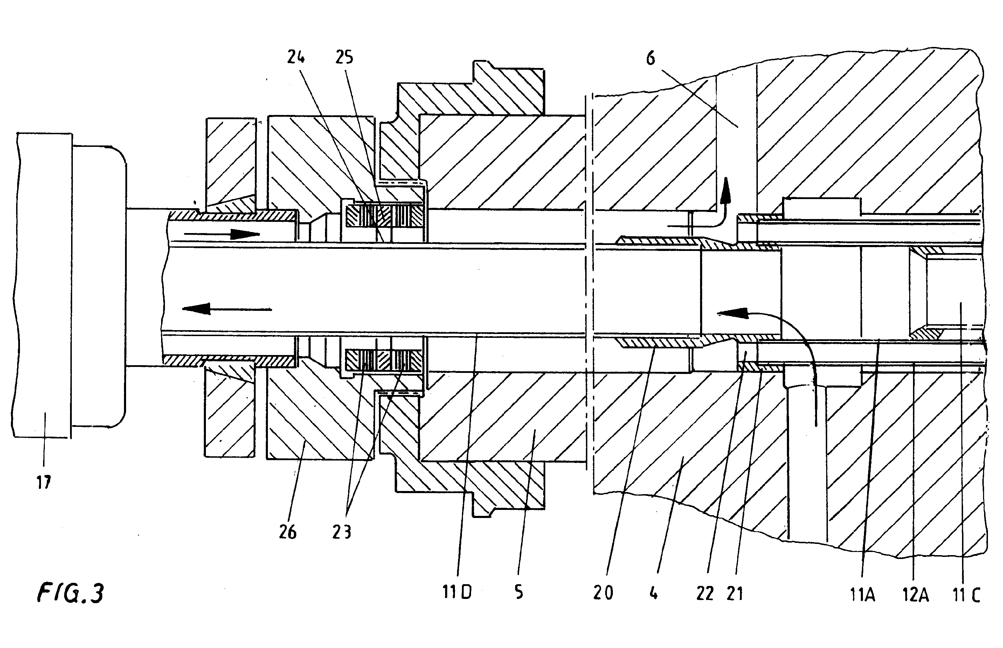

Wie Fig. 3 zeigt, erstreckt sich das äußere Rohr 12 nicht aus der Heizwalze heraus, es ist vielmehr mit seinem der Heißwasserzu- und -abführung 17 zugewandten Ende in einem Lagerteil 20 gelagert, welches in Form eines Muffenteiles 20 ausgebildet ist, welches eine Halterung für das innere Rohr 11 A, das äußere Rohr 12 A und das die Fortsetzung des Rohres 11 bildende, zur Zu- und Abführungsvorrichtung 17 führende Rohrstück 11 D bildet. Dieses Rohrstück 11 D ist mit einem Außengewinde in das Innengewinde der Muffe 20 eingeschraubt, auf deren Außengewinde das Rohrstück 11 A geschraubt ist. Dieses Muffenteil 20 ist von einem Ring 21 umgeben, der einstückig mit dem Muffenteil 20 hergestellt ist, ein Innengewinde aufweist, in welches das Rohr 12 A eingeschraubt ist und Löcher 22 aufweist, durch die das Heißwasser in den Zwischenraum zwischen den Rohren 11 A und 12 A einfließt, um zu dem Boden 4 geleitet zu werden, der der Zu- und Abführungsvorrichtung 17 gegenüberliegt. Dieses Muffenteil dient mit seinem äußeren Ring 21 aber auch der Einstellung der Menge des in den Kanal 6 hineinströmenden Heißwassers, denn dieser Ring deckt einen Teil des Kanales 6 ab. Diese Einstellung erfolgt mittels Distanzscheiben 23, die einen am Rohrstück 11 D befestigten, mit Löchern 24 versehenen Ring 25 einschließen. Diese Distanzscheiben sind an den Boden 4 bzw. den mit dem Boden 4 verbundenen Zapfen 5 durch eine Verschraubung 26 angepreßt. Durch Auswechseln von Distanzscheiben von der linken Seite des Ringes 25 zur rechten Seite des Ringes 25 bzw. umgekehrt, kann der Abstand des Muffenteiles 20 mit seinem Ring 21 gegenüber der Stirnseite des Zapfens 5 verändert werden und somit die Abdeckbreite des äußeren Umfanges des Ringes 21 gegenüber dem Kanal 6 verändert werden.

### Liste der Bezugszeichen:

- 1: Mantel
- 2: achsparallele Bohrung
- 3: Schraube
- 4: Boden
- 5: Wellenzapfen
- 6: radialer Kanal
- 7: radialer Kanal
- 8: Ausnehmung
- 9: Speichen
- 10: Zentrische Bohrung
- 11: Rohr Heizwasser-Abführung
- 12: Rohr Heizwasser-Zuführung
- 13: Ausnehmung
- 14: Kanalstück
- 15: Hülse
- 16: Dichtungen
- 17: Zu- und Abführungsvorrichtung
- 18: Heizwasserzulauf
- 19: Heizwasserabführung
- 20: Muffenteil
- 21: Ring
- 22: Loch
- 23: Distanzscheiben
- 24: Loch
- 25: Ring
- 26: Verschraubung

## Patentansprüche

1. Dichtungsplatten-Kalander mit einer Heizwalze, welche aus einem Mantel (1) mit achsparallelen, als Heizwasserkanäle dienenden peripheren Bohrungen (2) und zwei Böden (4) an den Stirnseiten der Heizwalze aufgebaut ist,
und in welcher ein sich vom einen Boden (4) zum anderen Boden (4) erstreckendes Rohr (11) für Heizwasser angeordnet ist,
von dem Kanäle (7) radial abzweigen, die zu den achsparallelen Bohrungen (2) im Mantel (1) führen,
dadurch gekennzeichnet,
- daß die Böden (4) je zentrisch mit einem Wellenzapfen versehen sind,
- von denen zumindest der eine für die Zu- und(oder Abführung von Heizwasser hohl ist,
- daß im Inneren der Heizwalze (1, 4) mindestens ein weiteres Rohr (12) für Heizwasser angeordnet ist, das mit dem ersten Rohr (11) ein Rohrsystem bildet,
- daß diese Rohre (11, 12) Mittel für die Aufnahme thermischer Dehnungen aufweisen und
- daß von jedem Rohr (11, 12) zu den peripheren Bohrungen (2) im Walzenmantel (1) an beiden Stirnseiten der Heizwalze Kanäle (6, 7) radial abgehen.

2. Dichtungsplatten-Kalander ach Anspruch 1, dadurch gekennzeichnet, daß beide Wellenstümpfe (5) hohl sind und durch den einen die Heißwasserzuleitung, durch den anderen die Heißwasserableitung führt.

3. Dichtungsplatten-Kalander nach Anspruch 1, dadurch gekennzeichnet, daß die Kanäle durch radiale Bohrungen (6,7) in den Walzenböden (4) gebildet sind.

4. Dichtungsplatten-Kalander nach Anspruch 1, dadurch gekennzeichnet, daß die Kanäle durch Rohre gebildet sind.

5. Dichtungsplatten-Kalander nach Anspruch 1, dadurch gekennzeichnet, daß die Böden (4) Durchbrechungen (8) aufweisen und vorzugsweise Speichen (9) aufweisen.

6. Dichtungsplatten-Kalander nach Anspruch 1, dadurch gekennzeichnet, daß die beiden Rohre (11, 12) konzentrich angeordnet sind und in den Bohrungen der Böden (4) ringförmige Ausnehmungen (13) vorgesehen, welche über Kanalstücke (14) mit dem inneren Rohr (11) verbunden sind.

7. Dichtungsplatten-Kalander nach Anspruch 1, dadurch gekennzeichnet, daß das Rohrsystem aus einer Vielzahl von konzentrich um die Achse angeordneten Rohren für die Zu- oder Ableitung von Heißwasser besteht, die beidseitig in in den Bohrungen (10) der Böden (4) angeordneten Lagerteilen (20) befestigt sind, von denen das der Zu- und Abführungsvorrichtung (17) abgewandte Lagerteil eine Trennwandung zwischen der Heißwasserzu- und -abführung bildet und vorzugsweise mit Um!enkvorrichtung versehen ist, während das der Zu- und Abführungsvorrichtung (17) zugewandte Lagerteil ebenfalls eine Trennvorrichtung zwischen der Heißwasserzu- und -abführung bildet, und daß die konzentrich angeordneten Rohre im Bereich zwischen den beiden Böden von einem äußeren Rohr umgeben sind.

8. Dichtungsplatten-Kalander nach Anspruch 7, dadurch gekennzeichnet, daß das Lagerteil (20), welches der Lagerung des inneren Rohres (11) und der äußeren Rohre (12) dient, mit einer Ringfläche (21) versehen ist, mit der die Kanäle (6) teilweise abdeckbar sind, und daß dieses Lagerteil (20) an einem Rohr (11D) befestigt ist, welches auf seiner Außenseite einen gelochten Ring (25) trägt, dessen Stellung gegenüber der Stirnseite des Wellenzapfens (5) durch Distanzscheiben (23) veränderbar ist.

## Claims

1. A sealing sheet calender comprising a heating roller which is constructed from a casing (1) with paraxial, peripheral bores (2) serving as heating water channels and from two plates (4) at the end sides of the heating roller, and wherein a pipe (11) for heating water extends from one end plate (4) to the other end plate (4), channels (7) leading to the paraxial bores (2) in the casing (1) branching off radially from said pipe (11), characterised in that
- the end plates (4) are each provided centrally with a shaft journal,
- of which at least one is hollow for the supply and/or discharge of heating water,
- inside the heating roller (1, 4) is arranged at least one further pipe (12) for heating water, which pipe (12) forms a pipe system with the first pipe (11),
- these pipes (11, 12) comprise means for the accomodation of thermal expansions and
- channels (6, 7) lead off radially from each pipe (11, 12) to the peripheral bores (2) in the roller casing (1) at both end sides of the heating roller.

2. A sealing sheet calender as claimed in Claim 1,
characterised in that both shaft ends (5) are hollow and the hot water supply is conducted through one of said shaft ends (5) and the hot water outlet is conducted through the other shaft end.

3. A sealing sheet calender as claimed in Claim 1,
characterised in that the channels are formed by radial bores (6, 7) in the roller end plates (4).

4. A sealing sheet calender as claimed in Claim 1,
characterised in that the channels are formed by pipes.

5. A sealing sheet calender as claimed in Claim 1,
characterised in that the end plates (4) comprise openings (8) and preferably are provided with spokes (9).

6. A sealing sheet calender as claimed in Claim 1,
characterised in that the two pipes (11,12) are disposed concentrically and annular openings (13) connected via channel sections (14) to the inner pipe (11) are provided in the bores of the end plates (4).

7. A sealing sheet calender as claimed in Claim 1,
characterised in that the pipe system comprises a plurality of pipes, arranged concentrically around the axis, for the supply or discharge of hot water, which pipes are secured on both sides in bearing members (20) which are disposed in the bores (10) of the end plates (4) and of which the bearing member facing away from the supply- and discharge device (17) forms a partition wall between the hot water inlet- and outlet and preferably is provide with deflecting means while the bearing member facing towards the supply- and discharge device (17) likewise forms a partition device between the hot water inlet- and outlet, and that the concentrically disposed pipes are surrounded by an outer pipe in the region between the two end plates.

8. A sealing sheet calender as claimed in Claim 7, characterised in that the bearing member (20), which supports the inner pipe (11) and the outer pipes (12), is provided with an annular surface (21) with which the channels (6) can be partially covered, and that this bearing member (20) is attached to a pipe (11D) which on its exterior bears an apertured ring (25), the position of which relative to the end side of the shaft journal (5) can be changed by spacing washers (23).

## Revendications

1. Calandre pour plaques d'étanchéité, comportant un cylindre chauffant, qui est constitué par une enveloppe (1) possédant des perçages périphériques (2) parallèles à l'axe, servant de canaux de circulation d'eau chaude, et par deux fonds (4) situés sur les faces frontales du cylindre chauffant, et
dans lequel est disposé un tube (11) prévu pour l'eau chaude et qui s'étend depuis un fond (4) jusqu'à l'autre fond (4), et
à partir duquel s'étendent radialement des canaux (7), qui aboutissent aux perçages (2), parallèles à l'axe, ménagés dans l'enveloppe (1),
caractérisée en ce
- que les fonds (4) comportent des bouts d'arbre respectifs en position centrée,
- dont l'un au moins est creux pour l'amenée et/ou l'évacuation d'eau chaude,
- qu'à l'intérieur du cylindre chauffant (1,4) est disposé au moins un autre tube (12) pour l'eau chaude, qui forme avec le premier tube (11) un système de tubes,
- que ces tubes (11,12) comportent des moyens pour absorber des dilatations thermiques, et
- que des canaux (6,7) s'étendent radialement depuis chaque tube (11,12) en direction des perçages périphériques (2), dans l'enveloppe (1) du cylindre, au niveau des deux faces frontales du cylindre chauffant.

2. Calandre pour plaques d'étanchéité selon la revendication 1, caractérisée en ce que les deux bouts d'arbre (5) sont creux et que l'un d'eux est traversé par la canalisation d'amenée d'eau chaude, tandis que l'autre est traversé par la canalisation d'évacuation d'eau chaude.

3. Calandre pour plaques d'étanchéité selon la revendication 1, caractérisée en ce que les canaux sont formés par des perçages radiaux (6,7) ménagés dans les fonds (4) du cylindre.

4. Calandre pour plaques d'étanchéité selon la revendication 1, caractérisée en ce que les canaux sont formés par des tubes.

5. Calandre pour plaques d'étanchéité selon la revendication 1, caractérisée en ce que les fonds (4) possèdent des passages (8) et comportent de préférence des rayons (9).

6. Calandre pour plaques d'étanchéité selon la revendication 1, caractérisée en ce que les deux tubes (11, 12) sont concentriques et que dans les perçages des fonds (4), il est prévu des évidements annulaires (13), qui sont reliés au tube intérieur (11) par des parties de canaux (14).

7. Calandre pour plaques d'étanchéité selon la revendication 1, caractérisée en ce que le système de tubes est constitué par une multiplicité de tubes disposés concentriquement autour de l'axe pour l'amenée ou l'évacuation de l'eau chaude et qui sont fixés des deux côtés dans des éléments de palier (20), qui sont disposés dans les perçages (10) des fonds (4) et parmi lesquels l'élément de palier, qui est situé à l'opposé du dispositif d'amenée et d'évacuation (17), forme une paroi de séparation entre l'amenée et l'évacuation de l'eau chaude et est équipé de préférence d'un dispositif de renvoi, tandis que l'élément de palier situé du côté du dispositif d'amenée et d'évacuation (17) forme également un dispositif de séparation entre l'amenée et l'évacuation de l'eau chaude, et que les tubes concentriques sont entourés dans la zone située entre les deux fonds, par un tube extérieur.

8. Calandre pour plaques d'étanchéité selon la revendication 7, caractérisée en ce que l'élément de palier (20), qui sert à supporter le tube intérieur (11) et le tube extérieur (12), est équipé d'une surface annulaire (21), avec laquelle les canaux (6) sont partiellement recouverts, et que cet élément de palier (20) est fixé à un tube (11D), qui comporte, dans sa face extérieure, un anneau perforé (25), dont la position est modifiable par rapport à la face frontale du bout d'arbre (5) au moyen de rondelles-entretoises (23).
